(19) **Europäisches Patentamt**
**European Patent Office**
**Office européen des brevets**

(11) **EP 3 293 848 A1**

(12) **EUROPEAN PATENT APPLICATION**
published in accordance with Art. 153(4) EPC

(43) Date of publication:
**14.03.2018 Bulletin 2018/11**

(51) Int Cl.:
**H02J 3/38** (2006.01)

(21) Application number: **15848156.4**

(22) Date of filing: **28.04.2015**

(86) International application number:
**PCT/JP2015/062869**

(87) International publication number:
**WO 2016/174747 (03.11.2016 Gazette 2016/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Kabushiki Kaisha Toshiba**
**Minato-ku**
**Tokyo 105-8001 (JP)**

(72) Inventors:
• **MAKI Koji**
**Tokyo 105-8001 (JP)**

• **MOCHIKAWA Hiroshi**
**Tokyo 105-8001 (JP)**
• **TAKAYANAGI Mariko**
**Tokyo 105-8001 (JP)**
• **MATSUMOTO Hiroaki**
**Tokyo 105-8001 (JP)**
• **YANAGIMOTO Shingo**
**Tokyo 105-8001 (JP)**

(74) Representative: **Awapatent AB**
**Östra Storgatan 7**
**553 21 Jönköping (SE)**

(54) **POWER CONVERSION DEVICE**

(57) A power conversion apparatus of an embodiment has a power converter, a frequency detector, an islanding detector and a controller. The power converter converts direct-current power supplied from a direct-current source to alternating-current power and supplies the alternating-current power to a load. The frequency detector detects a frequency of a grid voltage supplied to the load from a grid power source. The islanding detector detects islanding, based on variation of the frequency detected by the frequency detector. The controller computes the electric energy and polarity of the effective power and of the reactive power to be supplied to the load and controls the power converter based on the computation results and, when causing the islanding detector to detect islanding, computes the electric energy and polarity of the effective power and of the reactive power in the direction in which the power factor variation increases.

FIG. 1

**Description**

Field of Art

Embodiments of the present invention relate to a power conversion apparatus.

Background Art

Conventionally, an inverter apparatus is known that converts direct-current electrical power supplied from a direct-current power source such as a solar cell or a fuel cell to alternating-current power, links to a grid power source, and supplies electrical power to a load. The inverter apparatus sometimes has an islanding detection device that detects islanding that is cut off from the grid power source. The islanding detection device has detected islanding by varying the effective power supplied to the load and by detecting frequency fluctuation of the voltage. With the conventional art, however, if the frequency fluctuation of the voltage is small, there have been cases in which it was not possible to detect islanding with good accuracy.

Prior Art Reference

Patent Reference

Patent Reference 1: Japanese Patent Application Publication No. 2003-111283
Patent Reference 2: Japanese Patent Application Publication No. H8-223809
Patent Reference 3: Japanese Patent Application Publication No. 2008-61356

[Summary of the Invention]

[Problem the Invention Seeks to Solve]

The problem the present invention seeks to solve is that of providing a power conversion apparatus capable of detecting islanding with good accuracy.

[Means to Solve the Problem]

A power conversion apparatus of an embodiment has a power converter, a frequency detector, an islanding detector, and a controller. The power converter converts direct-current power supplied from a direct-current power source to alternating-current power supplied to a load. The frequency detector detects the frequency of the grid voltage supplied to the load from the grid power source. The islanding detector detects islanding based on the fluctuation of the frequency detected by the frequency detector. The controller computes the electric energy and polarity of the effective power and of the reactive power to be supplied to the load, controls the power converter based on the computation result, and, when causing the islanding detector to detect islanding, computes the electric energy and polarity of the effective power and of the reactive power in the direction in which the power factor variation increases.

[Brief Description of the Drawings]

FIG. 1 is a block diagram showing the constitution of a power conversion apparatus 1 of a first embodiment.
FIG. 2 is a drawing showing the relationship between the reactive power q and the effective power p in the power conversion apparatus 1 in the first embodiment.
FIG. 3 is a flowchart showing the operation in the power conversion apparatus 1 of the first embodiment.
FIG. 4 is another drawing showing the relationship between the reactive power q and the effective power p in the power conversion apparatus 1 of the first embodiment.
FIG. 5 is a block diagram showing the constitution of a power conversion apparatus 1A of a second embodiment.
FIG. 6 is a flowchart showing the operation in the power conversion apparatus 1A of the second embodiment.
FIG. 7 is a drawing showing the relationship between the reactive power q and the effective power p in the power conversion apparatus 1A of the second embodiment.

FIG. 8 is another drawing showing the relationship between the reactive power q and the effective power p in the power conversion apparatus 1A of the second embodiment.

FIG. 9 is a drawing showing the system constitution that is the pre-condition for a power converter simulation.

FIG. 10 is a drawing showing the result of a simulation of a power converter of a comparison example.

FIG. 11 is as drawing showing the result of a simulation of the conversion apparatus 1 of the first embodiment.

[Embodiments]

Power converters of embodiments will be described below, with references made to drawings.

(First Embodiment)

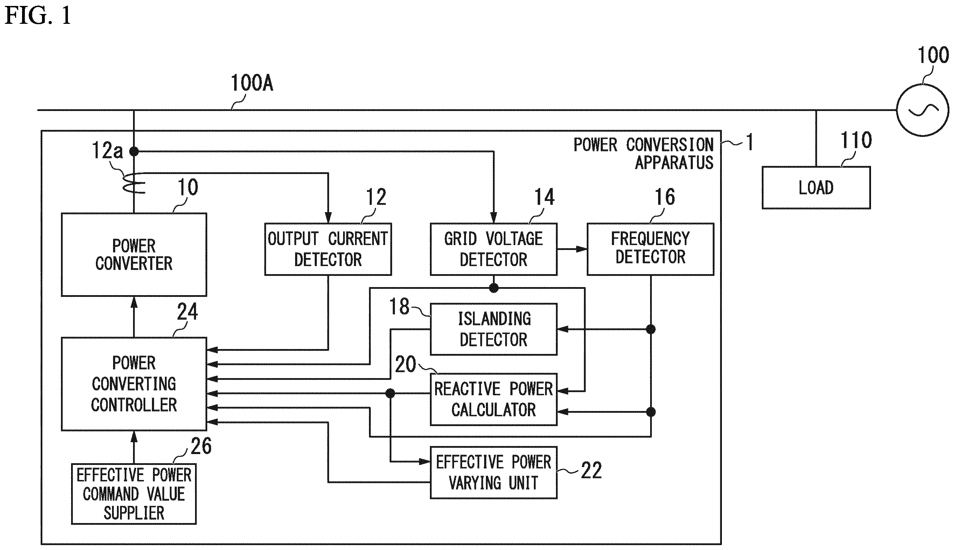

FIG. 1 is a block diagram showing the constitution of the power conversion apparatus 1 of the first embodiment. The power conversion apparatus 1 is connected to a power line 100A. The power conversion apparatus 1 is connected to a grid power source 100 and a load 110 via the power line 100A. The power conversion apparatus 1 supplies alternating-current power to the load 110 linked to the grid power source 100. The power conversion apparatus 1 of the first embodiment is a inter-connected power converter that, by an effective power command from an internal device or an external device, outputs effective power to the power line 100A. In the embodiment, whether the grid power source 100 and load 110 are single or multiple phase and the rated voltage values and the like are arbitrary.

The power conversion apparatus 1 of the first embodiment has a power converter 10, an output current detector 12, a grid voltage detector 14, a frequency detector 16, an islanding detector 18, a reactive power calculator 20, an effective power varying unit 22, a power converting controller 24, and an effective power command value supplier 26. In the first embodiment, the reactive power calculator 20, the effective power varying unit 22, and the power converting controller 24 function as a controller that computes the electric energy and polarity of the effective power and of the reactive power supplied to the power line 100A and that controls the power converter 10 based on the computation result.

The load 110 is electrical equipment that includes elements such as capacitors, reactors, and resistances. The load 110 consumes and operates by alternating-current power supplied from the grid power source 100 or supplied from the power conversion apparatus 1. The load 110 is generally categorized as a capacitive load or an inductive load. A capacitive load includes capacitance in addition to resistance. A capacitive load has a characteristic of causing the current to lead the voltage. An inductive load has coil of a motor or the like in addition to a resistance. An inductive load has a characteristic of causing the current to lag the voltage.

The power converter 10 converts direct-current power to alternating-current power supplied to the power line 100A. A direct-current power source (not shown) is connected to the power converter 10, which supplies direct-current power thereto. The direct-current power source is, for example, an electrical generator such as a solar cell panel, a fuel cell system, or a diesel generator and a converter that converts the alternating-current power thereof to direct-current power, or an electrical storage device such as a lead battery, a nickel-hydrogen battery or a lithium ion battery.

The power converter 10 has a power converting circuit (not shown) such as an inverter bridge having a plurality of semiconductor switching elements. The power converter 10 converts direct-current power supplied from a direct-current power source to alternating-current power by the power converting circuit, and supplies the power to the power line 100A. In the power converter 10, the electric energy and polarity of the effective power and the electric energy and the polarity of the reactive power are independently controlled.

The output current detector 12 detects the output current of the power conversion apparatus 1 that is supplied to the power line 100A from the power converter 10. The output current detector 12 detects the output current of the power conversion apparatus 1 based on a signal input from a current sensor 12a connected between the power line 100A and the power converter 10 and, based on the detected output current of the power conversion apparatus 1, outputs to the power converting controller 24 a signal (hereinafter noted as the output current signal) indicating the output current of the power conversion apparatus 1.

The grid voltage detector 14 detects the voltage value supplied to the load 110 from the grid power source 100 and outputs to the frequency detector 16, the reactive power calculator 20, and the power converting controller 24 signals (hereinafter noted as the grid voltage signal) indicating the detected voltage value. The grid voltage signals output from the grid voltage detector 14 include the fundamental and harmonics of the voltage value supplied to the load 110 from the grid power source 100. In the islanding state, although the grid voltage detected by the grid voltage detector 14 is the apparent voltage value supplied to the load 110 from the grid power source 100, in actuality this is the voltage generated by the output current output from the power converter 10 and the impedance of the load 110.

The frequency detector 16 detects the fundamental frequency from the grid voltage signal output from the grid voltage detector 14 and outputs to the islanding detector 18, the reactive power calculator 20, and the power converting controller 24 a signal (hereinafter noted as the fundamental frequency signal) indicating the detected fundamental frequency.

The effective power command value supplier 26 is an interface circuit that accepts an effective power command from an external device or an internal device. The effective power command value supplier 26 supplies to the power converting controller 24 a signal indicating a power command value of the effective power output from the power converter 10. The effective power command value supplier 26 is supplied with, for example, a power command value from a system upstream of a plurality of power converters 1. Although the command supplied to the power conversion apparatus 1 is taken here as being a power command, it may be a current command.

The power converting controller 24 controls the power converter 10. The power converting controller 24, for example, computes the target current based on a signal indicating the power command value and the grid voltage signal output by the grid voltage detector 14, and controls the power converter 10 so that the output current signal detected by the output current detector 12 approaches the target current. The power converting controller 24, by controlling the amplitude of the output current that is in-phase with the grid voltage, regulates the electric energy of effective power output from the power converter 10. The power converting controller 24, by controlling the amplitude of the output current shifted by 90 degrees from the grid voltage, regulates the electric energy of reactive power output from the power converter 10. This enables the power converting controller 24 to independently control the electric energy of effective power and the electric energy of reactive power output from the power converter 10. The power converting controller 24 may regulate the output current of the power conversion apparatus 1, by referring to reference the fundamental frequency signal detected by the frequency detector 16 in addition to the grid voltage signal output by the grid voltage detector 14.

The islanding detector 18 detects islanding of the power conversion apparatus 1 based on the fundamental frequency signal output by the frequency detector 16. "Islanding state" is the operating state of the power conversion apparatus 1 in which, in the state in which grid power source 100 stops supplying power, the power conversion apparatus 1 alone supplies power to the load 110. The islanding detector 18, for example, if the fluctuation of the fundamental frequency signal output by the frequency detector 16 exceeds a pre-established fluctuation of electric energy during the time period of observation, outputs a determination result that operation is islanding state to the power converting controller 24.

In the present embodiment, the reactive power calculator 20 and the effective power varying unit 22 are provided to improve the accuracy of detecting the islanding detection state and to shorten the detection time.

The reactive power calculator 20, based on the fluctuation of the fundamental frequency signal detected by the frequency detector 16, determines whether or not the timing for injection of reactive power to the power line 100A (hereinafter referred to as the reactive power injection timing) has come.

The reactive power calculator 20 extracts the harmonic components of the voltage value supplied to the load 110 from the grid power source 100 based on the grid voltage signal output from the grid voltage detector 14, and determines whether or not the reactive power injection timing has come, based on the fluctuation in the amplitude of the extracted harmonic components.

If the reactive power calculator 20 determines that the reactive power injection timing has come, it computes the electric energy and polarity of reactive power to be caused to be output by the power converter 10 for islanding detection. The reactive power calculator 20 outputs to the power converting controller 24 and the effective power varying unit 22 a signal (hereinafter noted as the reactive power command signal) indicating the computed electric energy and polarity of the computed reactive power.

The effective power varying unit 22 computes the variation amount and polarity of the effective power in the direction of increasing a power factor variation in combination with the reactive power output based on the reactive power command signal output by the reactive power calculator 20. This power factor is the power factor of the power output by the power conversion apparatus 1, which is determined by the proportion between the effective power and the reactive power output to the power line 100A from the power converter 10. In the following, in addition to referring to the power factor as the "power factor in the power conversion apparatus 1," if it is referred to simply as the "power factor," it will represent the power factor in the power conversion apparatus 1. The effective power varying unit 22 outputs to the power converting controller 24 a signal (hereinafter noted as the effective power command signal) indicating the computed variation amount and polarity of the effective power. In the first embodiment, by the effective power varying unit 22 varying the effective power with respect to the reactive power which has been output by the reactive power calculator 20, the power factor in the power conversion apparatus 1 is further varied. The variation amount and polarity of the effective power computed in the direction in which the power factor variation increases are added in the power converting controller 24 to the variation amount and polarity of the effective power based on an effective power command from outside.

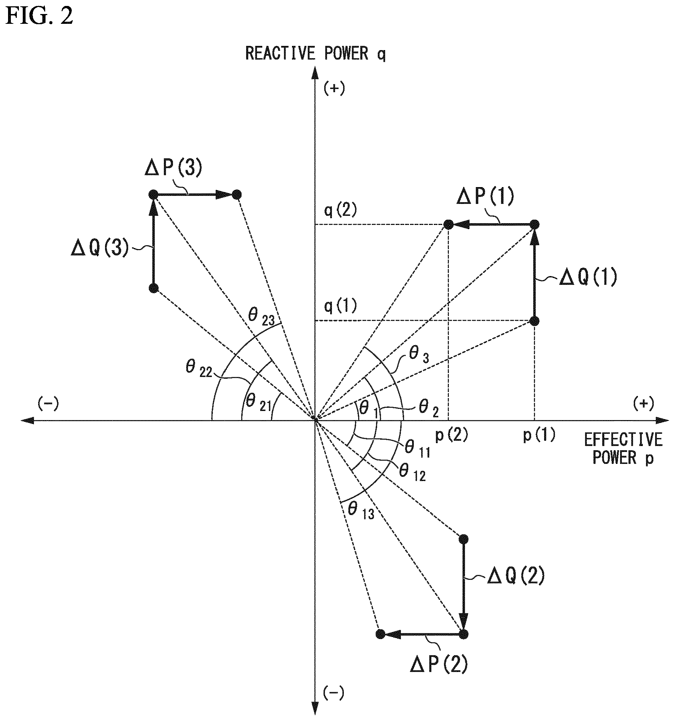

FIG. 2 shows the relationship between the reactive power q and the effective power p output by the power conversion apparatus 1 of the first embodiment. In FIG. 2, $\theta$ is the angle formed between the effective power p axis and a straight line joining the point of intersection between the effective power p axis and the reactive power q axis and the point established by the value of the effective power p and the value of the reactive power q. The power factor in the power conversion apparatus 1 is expressed by the following Equation 1, using the effective power p and the reactive

power q.

$$\text{Power factor} = p/\{p^2 + q^2\}^{1/2} \qquad \text{(Equation 1)}$$

That is, the power factor in the power conversion apparatus 1 is expressed using $\theta$ by Equation 2 shown below.

$$\text{Power factor} = \cos(\theta) \qquad \text{(Equation 2)}$$

The effective power varying unit 22, in accordance with the variation amount of the reactive power q expressed by the length of the vector in FIG. 2 and the polarity of the reactive power q expressed by the direction of the vector in FIG. 2, computes the variation amount and polarity of the effective power p in the direction in which the power factor variation increases. That is, the effective power varying unit 22 computes the variation amount and the polarity of the effective power p so that the variation of $\theta$ in FIG. 2 increases. By doing this, the reactive power calculator 20 and the effective power varying unit 22 promote the fluctuation of the frequency of the grid voltage with a variation of the power factor, enabling detection of the islanding state with good accuracy.

If the reactive power injection timing is determined to have come, the power converting controller 24, in accordance with the reactive power command signal indicating the electric energy and polarity of the reactive power computed by the reactive power calculator 20, varies the amplitude of the output current that is shifted by 90 degrees with respect to the grid voltage supplied to the power line 100A from the power converter 10. If the reactive power injection timing is determined to have come, the power converting controller 24 adds the electric energy and polarity of the effective power computed by the effective power varying unit 22 to the electric energy and polarity of the effective power computed based on the signal indicating an external effective power command and varies the amplitude of the output current that is in-phase with the grid voltage. This enables the power converting controller 24 to vary the effective power that had been controlled in accordance with the signal indicating the effective power command in the direction in which the variation of the power factor increases.

If the islanding detector 18 does not detect the islanding state, the power converting controller 24 controls the power converter 10 inter-connected with the grid power source 100. If the islanding state is detected by the islanding detector 18, the power converting controller 24 stops the operation of the power converter 10.

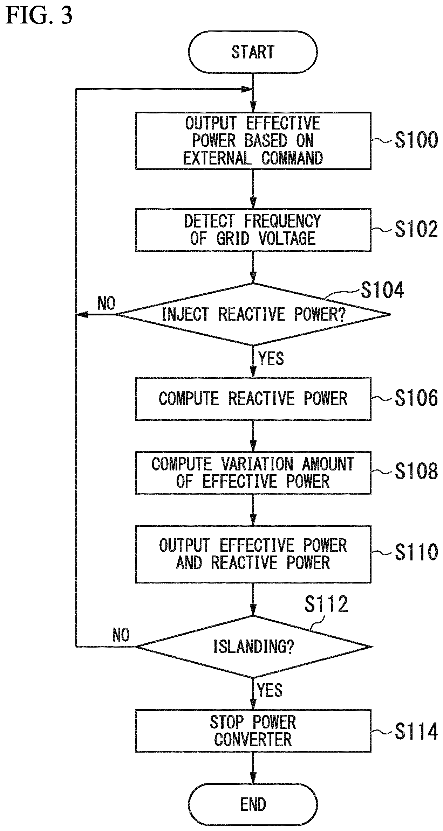

The operation of the power conversion apparatus 1 of the first embodiment will now be described. FIG. 3 is a flowchart showing the operation of the power conversion apparatus 1 of the first embodiment.

In the power conversion apparatus 1, the power converting controller 24 causes the power converter 10 to output the effective power, based on the signal indicating the power command value of the effective power (step S100). The power conversion apparatus 1 detects the grid voltage signal by the grid voltage detector 14, for example, each prescribed time period, and detects the fundamental frequency signal by the frequency detector 16 (step S102).

The reactive power calculator 20, based on the fluctuation of the fundamental frequency of the grid voltage detected at step S102, determines whether or not to inject reactive power for islanding detection (step SI04). The reactive power calculator 20, based on the grid voltage detected at step S102, computes the harmonic components of the grid voltage and determines, based on the fluctuation of the amplitude of the harmonic components, whether or not to inject reactive power for detection of islanding (step S104). The reactive power calculator 20 determines that the reactive power injection timing has come in response to the determination to inject reactive power. In response to the determination that the reactive power injection timing has come, the reactive power calculator 20, based on the fluctuation of the fundamental frequency or of the harmonic components of grid voltage, computes the electric energy and polarity of the reactive power output by the power conversion apparatus 1 (step S106).

Next, the effective power varying unit 22 computes the variation amount and polarity of effective power in the direction that makes the variation of the power factor in the power conversion apparatus 1 increase with respect to the computed electric energy and polarity of the reactive power output by the power conversion apparatus 1 (Step S108).

Next, the power converting controller 24 adds the electric energy and polarity of the effective power computed at step S108 to the electric energy and polarity of the effective power based on the effective power command computed at step S100 and, based on the result of the addition, controls the amplitude of the output current in-phase with the grid voltage, and causes the effective power to be output by the power converter 10 (step S110). The power converting controller 24 controls the amplitude of the output current shifted by 90 degrees from the grid voltage based on the reactive power having the electric energy and polarity computed at step S106, and causes the reactive power to be output by the power converter 10 (step S110).

The islanding detector 18, based on the fluctuation of the fundamental frequency signal detected by the frequency detector 16, determines whether or not the islanding state of the power conversion apparatus 1 has been detected (step S112). If the islanding state of the power conversion apparatus 1 has been detected, the power converting controller 24 stops the operation of the power converter 10 (step S114). If the islanding detector 18 did not detect the islanding state, processing returns to step S100.

Although in the embodiment the description is of the power converter 10 being stopped when islanding is detected, other control may be performed. For example, the power conversion apparatus 1 may control a breaker (not shown) provided between the power conversion apparatus 1 and the load 110 to the off state (open state), or may stop the power converter 10 after islanding is caused to continue for a prescribed time period.

Referring to FIG. 2, a specific example of varying the effective power based on the power command value of the effective power from an external device so as to vary it in the direction in which the variation of the power factor in the power conversion apparatus 1 increases with respect to the reactive power computed by the reactive power calculator 20 will be described below.

If both the effective power p and the reactive power q are positive, the reactive power calculator 20 computes a reactive power q (2) that is the reactive power q increased by the variation amount $\Delta Q(1)$ in the positive direction. In response to this, the power factor varies to $\cos \theta_2$. The effective power varying unit 22, in response to the variation of the power factor to $\cos \theta_2$, varies the effective power p to the effective power p(2) by reducing the effective power p by the variation amount $\Delta P(1)$ in the negative direction. As a result, the power factor varies to $\cos \theta_3$. In this manner, the effective power varying unit 22 computes the electric energy and polarity of the effective power so as to vary the power factor from $\cos \theta_1$ to $\cos \theta_3$. The variation amount of the power factor from $\cos \theta_1$ to $\cos \theta_3$ is larger than that of the power factor from $\cos \theta_1$ to $\cos \theta_2$.

If the effective power p is positive and the reactive power q is negative, and the determination is made that the reactive power injection timing has come, the reactive power calculator 20 computes a value that is the reactive power q reduced by the variation amount $\Delta Q(2)$ in the negative direction. This varies the power factor from $\cos \theta_{11}$ to $\cos \theta_{12}$. The effective power varying unit 22, in response to the variation of the power factor to $\cos \theta_{12}$, computes a value that is the effective power p reduced by the variation amount $\Delta P(2)$ in the negative direction. As a result, the power factor is varied from $\theta_{12}$ to $\cos \theta_{13}$. In this manner, the effective varying unit 22 computes the electric energy and polarity of the effective power so as to vary the power factor from $\cos \theta_{11}$ to $\cos \theta_{13}$. The variation amount of the power factor from $\cos \theta_{11}$ to $\cos \theta_{13}$ is larger than that of the power factor from $\cos \theta_{11}$ to $\cos \theta_{12}$.

If the effective power p is negative and the reactive power q is positive, and the determination is made that the reactive power injection timing has come, the reactive power calculator 20 computes a value that is the reactive power q reduced by the variation amount $\Delta Q(3)$ in the positive direction. This varies the power factor from $\cos \theta_{21}$ to $\cos \theta_{22}$. The effective power varying unit 22, in response to the variation of the power factor to $\cos \theta_{22}$, computes a value that is the effective power p reduced by the variation amount $\Delta P(3)$ in the negative direction. This varies the power factor from $\theta_{22}$ to $\cos \theta_{23}$. In this manner, the effective power varying unit 22 computes the electric energy and polarity of the effective power so as to vary the power factor from $\cos \theta_{21}$ to $\cos \theta_{23}$. The variation amount of the power factor from $\cos \theta_{21}$ to $\cos \theta_{23}$ is larger than that of the power factor from $\cos \theta_{21}$ to $\cos \theta_{22}$.

Although FIG. 2 shows three examples in which the power factor is varied, even both the effective power p and the reactive power q are negative, the effective power can be controlled in the direction that increases the power factor variation, similar to the other examples. Also, although the description of the embodiment is that of varying the effective power p by the effective power varying unit 22 after the reactive power calculator 20 varies the reactive power q, the power converting controller 24 may vary the effective power p and the reactive power q substantially simultaneously.

In this manner, in the power conversion apparatus 1 of the first embodiment, when the islanding detector 18 is made to detect islanding, the absolute value of the effective power p is made small, in contrast to the absolute value of the reactive power, which is made large. Also, when the islanding detector 18 is made to detect islanding, the power conversion apparatus 1 makes the absolute value of the effective power p large, in contrast to the absolute value of the reactive power q, which is made small. By doing this as well, the effective power varying unit 22 varies the effective power p in the direction in which the power factor variation increases.

As described above, according to the power conversion apparatus 1 of the first embodiment, in addition to computing the electric energy and polarity of the reactive power supplied to the load 110 for detection of islanding, the variation amount and polarity of the effective power is computed in the direction that makes the power factor variation with respect to the computed reactive power electric energy and polarity large, and the computed effective power variation amount and polarity in the direction that makes the power factor variation large is added to the effective power variation amount and polarity computed based on an effective power command. By doing this, the power conversion apparatus 1 of the first embodiment can increase the fluctuation of the frequency of the grid voltage detected by the grid voltage detector 14 accompanying the variation in the power factor. As a result, according to the power conversion apparatus 1 of the first embodiment, the islanding detector 18 can detect the islanding state with good accuracy and can detect the islanding state more quickly.

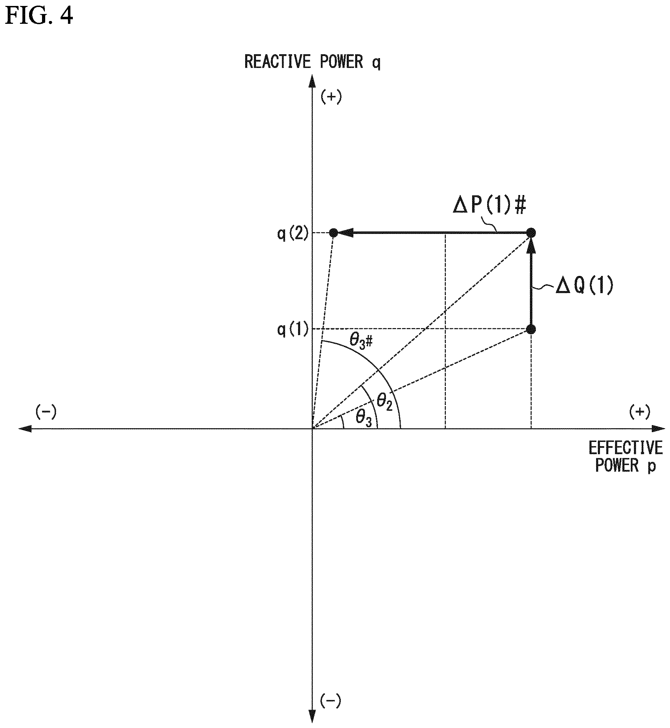

In this case, the output current shifted by 90 degrees from the grid voltage that can be output is limited by the maximum output current and the current apparent power in the power conversion apparatus 1. However, according to the power conversion apparatus 1 of the embodiment, even if the output current shifted by 90 degrees from the grid voltage is limited, the output current that is in-phase with the grid voltage can be varied without dependence on the apparent power, enabling variation of the power factor in the power conversion apparatus 1. FIG. 4 shows an example in which the variation amount $\Delta P(1)\#$ of the effective power is computed without dependence on the apparent power. As a result, according to the power conversion apparatus 1 of the embodiment, it is possible to vary the power factor to $\cos \theta_3\#$ more than the variation of only the reactive power for islanding detection, thereby enabling fast detection of the islanding state.

Additionally, according to the power conversion apparatus 1 of the first embodiment, as shown in FIG. 2, when causing the islanding detector 18 to detect islanding, the effective power varying unit 22 makes the absolute value of the effective power p small with respect to the increase in the absolute value of the reactive power q computed by the reactive power calculator 20. Also, according to the power conversion apparatus 1 of the first embodiment, when causing the islanding detector 18 to detect islanding, the effective power varying unit 22 makes the absolute value of the effective power p large with respect to the decrease in the absolute value of the reactive power q computed by the reactive power calculator 20. As a result, according to the power conversion apparatus 1 of the first embodiment, the difference between the power factor in the power conversion apparatus 1 before determining that the reactive power injecting timing has come and the power factor in the power conversion apparatus 1 after the injection of the reactive power q can be made large.

(Second Embodiment)

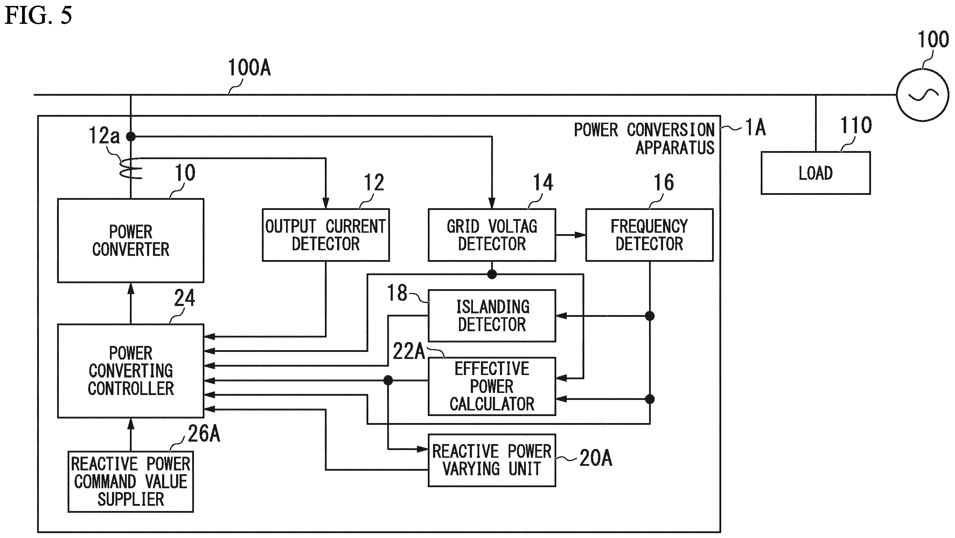

The second embodiment will be now be described, in which parts that are the same as in the above-described embodiment are assigned the same reference symbols. FIG. 5 is a block diagram showing the constitution of a power conversion apparatus 1A of the second embodiment. The power conversion apparatus 1A of the second embodiment is a inter-connected power converter that outputs reactive power to the power line 100A by a reactive power command from an external device or an internal device. The power conversion apparatus 1A of the second embodiment has a reactive power varying unit 20A and an effective power calculator 22A in place of the reactive power calculator 20 and the effective power varying unit 22 of the power conversion apparatus 1 of the above-described first embodiment. In the second embodiment, the reactive power varying unit 20A, the effective power calculator 22A, and the power converting controller 24 functions as a controller that computes the electric energy and polarity of the effective power and the reactive power to be supplied to the power line 100A and controls the power converter 10 based on the computation results.

The power conversion apparatus 1A of the second embodiment has a reactive power command value supplier 26A in place of the effective power command value supplier 26 of the first embodiment. The reactive power command value supplier 26A is an interface circuit that accepts a reactive power command from an external device or an internal device. The reactive power command value supplier 26A supplies to the power converting controller 24 a signal indicating a power command value of the reactive power to be output from the power converter 10. The reactive power command value supplier 26A, for example, is supplied with a power command value from a system upstream of a plurality of power conversion apparatuses 1A. Although the command supplied to the power conversion apparatus 1A is taken here as being a power command, it may be a current command.

The power converting controller 24 controls the power converter 10. The power converting controller 24, for example, computes the target current based on a signal indicating the power command value and the voltage signal output by the grid voltage detector 14, and controls the power converter 10 so that the output current signal detected by the output current detector 12 approaches the target current. The power converting controller 24, by controlling the amplitude of the output current that is in-phase with the grid voltage, regulates the effective power output from the power converter 10. The power converting controller 24, by controlling the amplitude of the output current shifted by 90 degrees from the grid voltage, regulates the reactive power output from the power converter 10. This enables the power converting controller 24 to independently control the effective power and the reactive power output from the power converter 10. The power converting controller 24 may, in addition to the voltage signal output by the grid voltage detector 14, reference the fundamental frequency signal detected by the frequency detector 16 to regulate the output current of the power conversion apparatus 1A.

The effective power calculator 22A, based on the fluctuation of the fundamental frequency signal detected by the frequency detector 16, determines whether or not the timing for injection of effective power to the power line 100A (hereinafter referred to as the effective power injection timing) has come.

The effective power calculator 22A extracts the harmonic components of the voltage value supplied to the load 110 from the grid power source 100 based on the voltage signal output from the grid voltage detector 14, and determines whether or not the effective power injection timing has come, based on the fluctuation in the amplitude of the extracted harmonic components.

If the effective power calculator 22A determines that the effective power injection timing has come, it computes the electric energy and polarity of effective power to be caused to be output by the power converter 10 for islanding detection. The effective power calculator 22A outputs to the power converting controller 24 and the reactive power varying unit 20A a signal (hereinafter noted as the effective power command signal) indicating the computed electric energy and polarity of the computed effective power.

The reactive power varying unit 20A, computes the variation amount and polarity of the reactive power in the direction of increasing the variation amount of the power factor in combination with the effective power output based on the effective power command signal output by the effective power calculator 22A. This power factor, similar to the first embodiment, is the power factor of the power output by the power conversion apparatus 1A, which is determined by the proportion between the effective power and the reactive power output to the power line 100A from the power converter 10. In the following, in addition to referring to the power factor as the "power factor in the power conversion apparatus 1A," if it is referred to simply as the "power factor," it will represent the power factor in the power conversion apparatus 1A. The reactive power varying unit 20A outputs to the power converting controller 24 a signal (hereinafter noted as the reactive power command signal) indicating the computed variation amount and polarity of the reactive power. In the second embodiment, by the reactive power varying unit 20A varying the reactive power with respect to the effective power which has been output by the effective power calculator 22A, the power factor in the power conversion apparatus 1A is further varied. The variation amount and polarity of the reactive power computed in the direction in which the power factor variation increases are added in the power converting controller 24 to the variation amount and polarity of the reactive power based on an effective power command from outside.

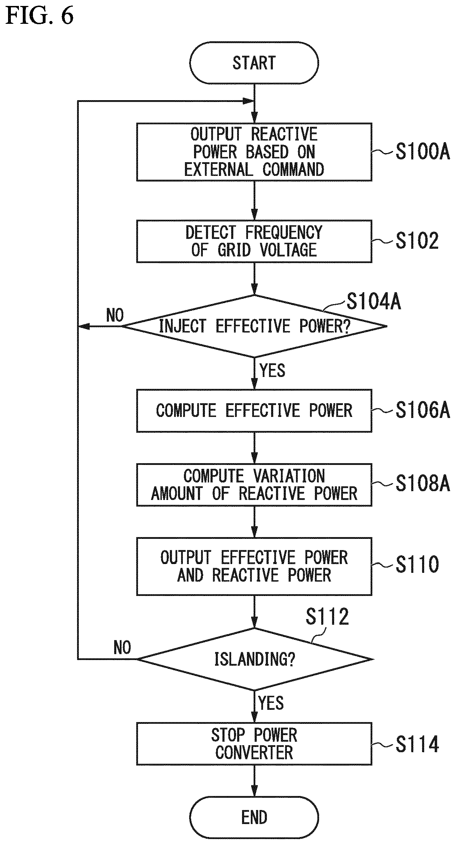

The operation of the power conversion apparatus 1A of the second embodiment will now be described. FIG. 6 is a flowchart showing the operation of the power conversion apparatus 1A of the second embodiment.

In the power conversion apparatus 1A, the power converting controller 24 causes the power converter 10 to output the reactive power, based on the signal indicating the power command value of the reactive power supplied from an external device (step S100A). The power conversion apparatus 1A detects the grid voltage by the grid voltage detector 14, for example, each prescribed time period, and detects the fundamental frequency by the frequency detector 16 (step S102).

The effective power calculator 22A, based on the fluctuation of the fundamental frequency of the grid voltage detected at step S102, determines whether or not to inject effective power for islanding detection (step S104A). The effective power calculator 22A, based on the grid voltage detected at step S102, computes the harmonic components of the grid voltage and determines, based on the fluctuation of the amplitude of the harmonic components, whether or not to inject effective power for detection of islanding (step S 104A). The effective power calculator 22A determines that the effective power injection timing has come in response to the determination to inject effective power. In response to the determination that the effective power injection timing has come, the effective power calculator 22A, based on the fluctuation of the fundamental frequency or of the harmonic components of grid voltage, computes the electric energy and polarity of the effective power output by the power conversion apparatus 1A (step S106A).

Next, the reactive power varying unit 20A computes the variation amount and polarity of reactive power in the direction that makes the variation of the power factor in the power conversion apparatus 1A increase with respect to the computed electric energy and the polarity of the effective power (Step S108A).

Next, the power converting controller 24 adds the electric energy and polarity of the reactive power computed at step S108A to the electric energy and polarity of the reactive power based on the reactive power command computed at step S100A and, based on the result of the addition, controls the amplitude of the output current shifted by 90 degrees from the grid voltage, and causes the reactive power to be output by the power converter 10 (step S110). The power converting controller 24 controls the amplitude of the output current in-phase with the grid voltage based on the effective power having the electric energy and polarity computed at step S106A, and causes the effective power to be output by the power converter 10 (step S110).

The islanding detector 18, based on the fluctuation of the fundamental frequency signal detected by the frequency detector 16, determines whether or not the islanding state of the power conversion apparatus 1A has been detected (step S112). If the islanding state of the power conversion apparatus 1A has been detected, the power converting controller 24 stops the operation of the power converter 10 (step S114). If the islanding detector 18 did not detect the islanding state, processing returns to step S100.

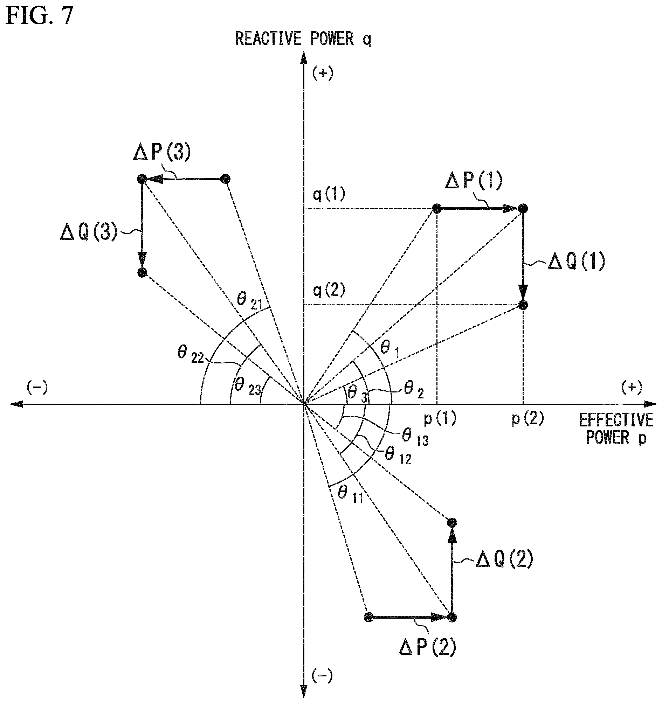

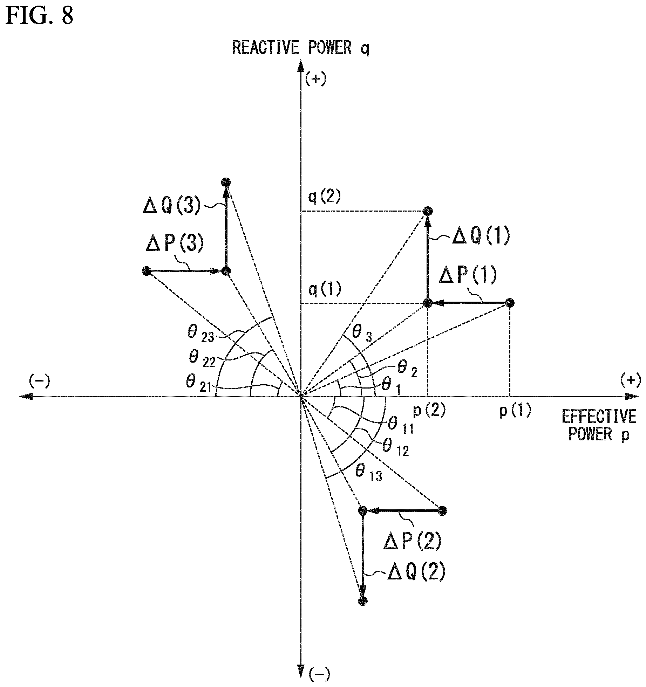

Referring to FIG. 7, and FIG. 8, a specific example of varying the reactive power based on the power command value of the reactive power from an external device or an internal device so as to vary it in the direction in which the variation of the power factor in the power conversion apparatus 1A increases with respect to the effective power computed by the effective power calculator 22A will be described below. FIG. 7 is a drawing showing the relationship between the reactive power q and the effective power p in the power conversion apparatus 1A of the second embodiment. As shown in FIG. 7, in the case in which determination is made that the effective power injection timing has come, if the effective power p is p (1) and the reactive power q is q (1), from the above-described Equation 2, the power factor is $\cos(\theta_1)$.

The effective power calculator 22A computes an effective power p (2) that is the effective power p increased by the variation amount $\Delta P(1)$ in the positive direction. In response to this, the power factor varies to $\cos\theta_2$. The reactive power varying unit 20A, in response to the variation of the power factor to $\cos\theta_2$, computes the reactive power q(2) by reducing the reactive power q by the variation amount $\Delta Q(1)$ in the negative direction. As a result, the power factor varies to $\cos \theta_3$. In this manner, the reactive power varying unit 20A computes the variation amount and polarity of the reactive power so as to vary the power factor from $\cos \theta_1$ to $\cos \theta_3$. The variation amount of the power factor from $\cos \theta_1$ to $\cos \theta_3$ is larger than that of the power factor from $\cos \theta_1$ to $\cos \theta_2$.

If the effective power p is positive and the reactive power q is negative, and the determination is made that the effective power injection timing has come, the effective power calculator 22A computes a value that is the effective power p increased by the variation amount $\Delta P(2)$ in the positive direction. This varies the power factor from $\cos \theta_{11}$ to $\cos \theta_{12}$. The reactive power varying unit 20A, in response to the variation of the power factor to $\cos \theta_{12}$, computes a value that is the reactive power q increased by the variation amount $\Delta Q(2)$ in the positive direction. This varies the power factor from $\theta_{12}$ to $\cos \theta_{13}$. In this manner, the reactive power varying unit 20A computes the variation amount and polarity of the reactive power so as to vary the power factor from $\cos \theta_{11}$ to $\cos \theta_{13}$. The variation amount of the power factor from $\cos \theta_{11}$ to $\cos \theta_{13}$ is larger than that of the power factor from $\cos \theta_{11}$ to $\cos \theta_{12}$.

If the effective power p is negative and the reactive power q is positive, and the determination is made that the effective power injection timing has come, the effective power calculator 22A computes a value that is the effective power p reduced by the variation amount $\Delta P(3)$ in the negative direction. This varies the power factor from $\cos \theta_{21}$ to $\cos \theta_{22}$. The reactive power varying unit 20A, in response to the variation of the power factor to $\cos \theta_{22}$, computes a value that is the reactive power q reduced by the variation amount $\Delta Q(3)$ in the negative direction. This varies the power factor from $\theta_{22}$ to $\cos \theta_{23}$. In this manner, the reactive power varying unit 20A computes the electric energy and polarity of the reactive power so as to vary the power factor from $\cos \theta_{21}$ to $\cos \theta_{23}$. The variation amount of the power factor from $\cos \theta_{21}$ to $\cos \theta_{23}$ is larger than that of the power factor from $\cos \theta_{21}$ to $\cos \theta_{22}$.

In this manner, when the islanding detector 18 is made to detect islanding, the absolute value of the reactive power q is made small by the reactive power varying unit 20A, in contrast to the absolute value of the effective power p computed by the effective value calculator 22A, which is made large. By doing this, the reactive power varying unit 20A varies the reactive power q in the direction in which the power factor variation increases.

FIG. 8 is another drawing showing the relationship between the reactive power q and the effective power p in the power conversion apparatus 1A of the second embodiment. As shown in FIG. 8, in the case in which determination is made that the effective power injection timing has come, if the effective power p is p (1) and the reactive power q is q (1), from the above-described equation 2, the power factor is $\cos (\theta_1)$.

The effective power calculator 22A computes an effective power p (2) that is the effective power p reduced by the variation amount $\Delta P(1)$ in the negative direction. This varies the power factor to $\cos \theta_2$. The reactive power varying unit 20A, in response to the variation of the power factor to $\cos \theta_2$, computes the reactive power q(2) by increasing the reactive power q by the variation amount $\Delta Q(1)$ in the positive direction. As a result, the power factor varies to $\cos \theta_3$. In this manner, the reactive power varying unit 20A computes the electric energy and polarity of the reactive power so as to vary the power factor from $\cos \theta_1$ to $\cos \theta_3$. The variation amount of the power factor from $\cos \theta_1$ to $\cos \theta_3$ is larger than that of the power factor from $\cos \theta_1$ to $\cos \theta_2$.

If the effective power p is positive and the reactive power q is negative, and the determination is made that the effective power injection timing has come, the effective power calculator 22A computes a value that is the effective power p reduced by the variation amount $\Delta P(2)$ in the negative direction. This varies the power factor from $\cos \theta_{11}$ to $\cos \theta_{12}$. The reactive power varying unit 20A, in response to the variation of the power factor to $\cos \theta_{12}$, computes a value that is the reactive power q reduced by the variation amount $\Delta Q(2)$ in the negative direction. This varies the power factor from $\theta_{12}$ to $\cos \theta_{13}$. In this manner, the reactive power varying unit 20A computes the electric energy and polarity of the reactive power so as to vary the power factor from $\cos \theta_{12}$ to $\cos \theta_{13}$. The variation amount of the power factor from $\cos \theta_{11}$ to $\cos \theta_{13}$ is larger than that of the power factor from $\cos \theta_{11}$ to $\cos \theta_{12}$.

If the effective power p is negative and the reactive power q is positive, and the determination is made that the effective power injection timing has come, the effective power calculator 22A computes a value that is the effective power p reduced by the variation amount $\Delta P(3)$ in the negative direction. This varies the power factor from $\cos \theta_{21}$ to $\cos \theta_{22}$. The reactive power varying unit 20A, in response to the variation of the power factor to $\cos \theta_{22}$, computes a value that is the reactive power q increased by the variation amount $\Delta Q(3)$ in the positive direction. This varies the power factor from $\theta_{22}$ to $\cos \theta_{23}$. In this manner, the reactive power varying unit 20A computes the electric energy and polarity of the reactive power so as to vary the power factor from $\cos \theta_{21}$ to $\cos \theta_{23}$. The variation amount of the power factor from $\cos \theta_{21}$ to $\cos \theta_{23}$ is larger than that of the power factor from $\cos \theta_{21}$ to $\cos \theta_{22}$.

In this manner, when the islanding detector 18 is made to detect islanding, the absolute value of the reactive power q is made large by the reactive power varying unit 20A, in contrast to the absolute value of the effective power p computed by the effective value calculator 22A, which is made small. By doing this, the reactive power varying unit 20A varies the reactive power q in the direction in which the power factor variation increases.

Although FIG. 7 and FIG. 8 show three examples in which the power factor is varied, even if both the effective power p and the reactive power q are negative, the reactive power can be controlled in the direction that increases the power factor variation, similar to the other examples. Also, although the description of the embodiment is that of the effective power varying unit 22A varying the reactive power q after varying effective power p, the power converting controller 24 may vary the effective power p and the reactive power q substantially simultaneously.

In this manner, according to the power conversion apparatus 1A of the second embodiment, in addition to computing the electric energy and the polarity of the effective power for detection of islanding, the variation amount and polarity of the reactive power is computed in the direction in which the power factor variation increases with respect to the computed electric energy and polarity of the effective power, and the variation amount and polarity of the reactive power computed in the direction in which the power factor variation increases are added to the variation amount and polarity of the reactive power computed based on the reactive power command. By doing this, the power conversion apparatus 1A of the second embodiment can increase the fluctuation of the frequency of the grid voltage detected by the grid voltage detector 14 accompanying a variation in the power factor. As a result, the power conversion apparatus 1A of the second embodiment can detect islanding by the islanding detector 18 with greater accuracy.

When causing the islanding detector 18 to detect islanding, the reactive power varying unit 20A, as shown in FIG. 7, makes the absolute value of the reactive power q small, in contrast to the absolute value of the effective power p, which is made larger. Also, when causing the islanding detector 18 to detect islanding, the reactive power varying unit 20A, as shown in FIG. 8, makes the absolute value of the reactive power q large, in contrast to the absolute value of the effective power p, which is made smaller. As a result, according to the power conversion apparatus 1A of the second embodiment, it is possible to make the difference between the power factor before the determination that the reactive power injection timing has come and the power factor after the reactive power q is injected large.

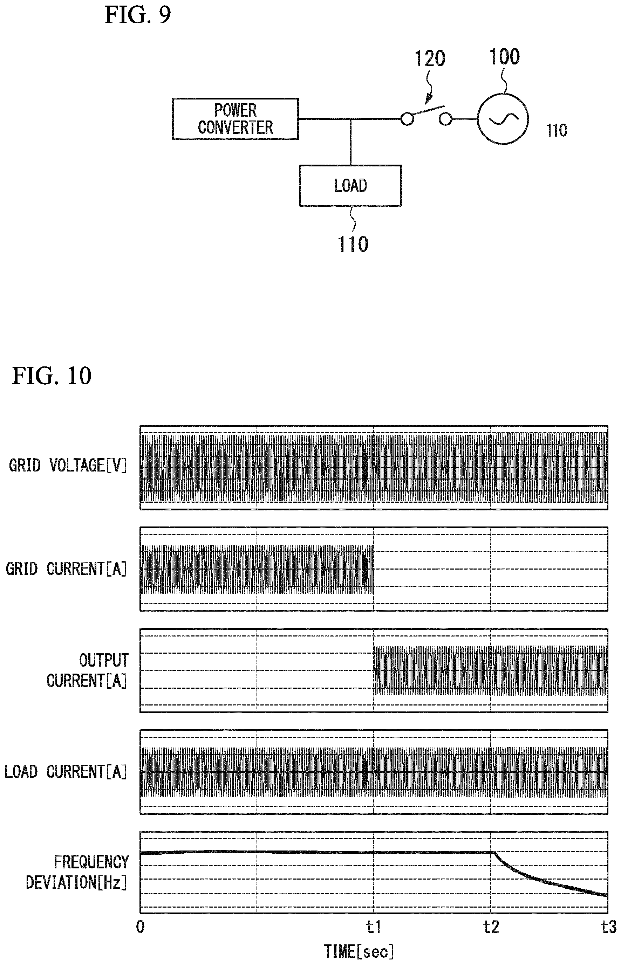

The results of a simulation of the above-described power conversion apparatus 1 of the first embodiment will now be described. FIG. 9 shows the system configuration that is a pre-condition of the simulation of the power converter. The simulation assumes a constitution in which one each of a power converter and a load 110 are connected to one grid power source 100 via a breaker 120. The grid power source 100 outputs an alternating-current voltage of 200 V and the internal impedance of the grid power source 100 is ignored.

FIG. 10 shows the results of the simulation of the power converter of a comparison example. FIG. 10 shows, from top to bottom, the grid voltage and grid current detected by the power converter, the output current of the power converter, the load current in the load 110, and the frequency deviation of the grid voltage detected by the power converter with respect to the frequency of the grid voltage obtained by the power converter (PLL (phase-locked loop) circuit).

In FIG. 10, grid power is supplied to the power line 100A from the time 0, and after the time t1 an output current is supplied to the power line 100A that is the same as the grid current. By doing this, the grid current is not supplied to the power line 100A after the time t1. At time t2, the breaker 120 is opened, thereby separating the grid power source 100, the power converter, and, the load 110 and the power converter is switched to the islanding state from the inter-connecting. After that, the power converter detects the islanding state and starts injection of reactive power after 0.02 second has elapsed from the time t2. After that, at the time t3, which is 1 second after the time t2, the frequency deviation was -0.32 Hz.

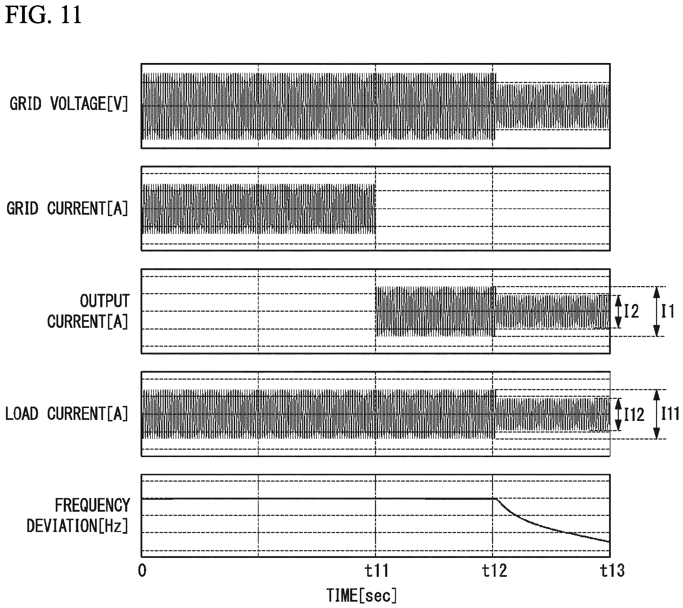

FIG. 11 shows the results of the simulation of the power conversion apparatus 1 of the first embodiment. In the power conversion apparatus 1 of the first embodiment, at the time t11 an output current is supplied to the power line 100A that is the same as the grid current. After that, at the time t12, the breaker 120 is opened, thereby separating the grid power source 100, the power conversion apparatus 1, and, the load 110, and the power conversion apparatus 1 is switched to the islanding state from the inter-connecting. After that, the power conversion apparatus 1 detects the islanding and starts injection of reactive power after 0.02 second has elapsed from the time t12 for detection of islanding, varies the effective power in the direction that increases the variation of the power factor, and, by restricting the output current of the power conversion apparatus 1 to 60%, reduces from I1 to I2. As a result, the load current is reduced from 111 to 112 after time t12. As a result, the frequency deviation at the time tl3 was -0.5 Hz.

As noted above, according to the power conversion apparatus 1 of the first embodiment, if the determination is made that the reactive power injection timing has come, in addition to injecting reactive power for detection of islanding, by varying the effective power in the direction that increases the variation of the power factor, it is possible to cause a larger frequency deviation than in the comparison example, thereby enabling islanding detection with better accuracy.

According to at least one of the embodiments described above, when causing the islanding detector 18 to detect islanding, by having a controller that computes the electric energy and polarity of the effective power and the reactive power in the direction in which the power factor variation increases, it is possible to increase the fluctuation of the frequency of the grid voltage detected by the grid voltage detector 14 accompanying the power factor variation, thereby enabling detection of islanding with better accuracy.

While certain embodiments have been described, these embodiments have been presented by way of example only, and are not intended to limit the scope of the inventions. Indeed, the novel embodiments described herein may be embodied in a variety of other forms, and various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1. A power conversion apparatus comprising:

   a power converter that converts direct-current power supplied from a direct-current source to alternating-current power and supplies the alternating-current power to a load;
   a frequency detector that detects a frequency of a grid voltage supplied to the load from a grid power source;
   an islanding detector that detects islanding, based on variation of the frequency detected by the frequency detector; and
   a controller that computes the electric energy and polarity of the effective power and of the reactive power to be supplied to the load and controls the power converter based on the computation results and that, when causing the islanding detector to detect islanding, computes the electric energy and polarity of the effective power and of the reactive power in the direction in which the power factor variation increases.

2. The power conversion apparatus according to claim 1,
   wherein the controller computes the effective power to be supplied to the load based on a command and, when causing the islanding detector to detect islanding, computes the electric energy and polarity of the reactive power to be supplied to the load for detection of the islanding, and also computes the variation amount and the polarity of the effective power in the direction in which the variation of the power factor is increased with respect to the computed electric energy and polarity of the reactive power, and adds the variation amount and the polarity of the effective power computed in the direction that increases the power factor variation to the variation amount and polarity of the effective power computed based on the command.

3. The power conversion apparatus according to claim 2,
   wherein the controller, when causing the islanding detector to detect islanding, makes the absolute value of the effective power small, in contrast with the computed absolute value of the reactive power, which was made large, and makes the absolute value of the effective power large, in contrast with the computed absolute value of the reactive power, which was made small.

4. The power conversion apparatus according to claim 1,
   wherein the controller computes the electric energy and polarity of the reactive power to be supplied to the load based on a command and, when causing the islanding detector to detect islanding, computes the electric energy and polarity of the effective power to be supplied to the load for detection of the islanding, and also computes the variation amount and the polarity of the reactive power in the direction in which the variation of the power factor is increased with respect to the computed electric energy and polarity of the effective power, and adds the variation amount and the polarity of the reactive power computed in the direction that increases the power factor variation to the variation amount and polarity of the reactive power computed based on the command.

5. The power conversion apparatus according to claim 4,
   wherein the controller, when causing the islanding detector to detect islanding, makes the absolute value of the reactive power large, in contrast with the computed absolute value of the effective power, which was made small, and makes the absolute value of the reactive power small, in contrast with the computed absolute value of the effective power, which was made large.

# FIG. 1

EP 3 293 848 A1

FIG. 2

FIG. 3

```
                    ┌─────────────┐
                    │    START    │
                    └──────┬──────┘
                           │
        ┌──────────────────┤
        │          ┌────────▼────────┐
        │          │  OUTPUT EFFECTIVE│
        │          │  POWER BASED ON  │──S100
        │          │  EXTERNAL COMMAND│
        │          └────────┬────────┘
        │                   │
        │          ┌────────▼────────┐
        │          │ DETECT FREQUENCY│──S102
        │          │  OF GRID VOLTAGE│
        │          └────────┬────────┘
        │                   │
        │  NO         ◇─────▼─────◇  S104
        ├──────────◇ INJECT REACTIVE POWER? ◇
        │            ◇───────────◇
        │                   │ YES
        │          ┌────────▼────────┐
        │          │ COMPUTE REACTIVE│──S106
        │          │      POWER      │
        │          └────────┬────────┘
        │                   │
        │          ┌────────▼────────┐
        │          │COMPUTE VARIATION│──S108
        │          │AMOUNT OF        │
        │          │EFFECTIVE POWER  │
        │          └────────┬────────┘
        │                   │
        │          ┌────────▼────────┐
        │          │ OUTPUT EFFECTIVE│──S110
        │          │ POWER AND       │
        │          │ REACTIVE POWER  │
        │          └────────┬────────┘
        │                   │      S112
        │  NO         ◇─────▼─────◇
        └──────────◇  ISLANDING?  ◇
                     ◇───────────◇
                           │ YES
                  ┌────────▼────────┐
                  │   STOP POWER    │──S114
                  │   CONVERTER     │
                  └────────┬────────┘
                           │
                    ┌──────▼──────┐
                    │     END     │
                    └─────────────┘
```

FIG. 4

FIG. 5

POWER CONVERSION APPARATUS ~1A

100A

100

110
LOAD

12a

10
POWER CONVERTER

12
OUTPUT CURRENT DETECTOR

14
GRID VOLTAG DETECTOR

16
FREQUENCY DETECTOR

24
POWER CONVERTING CONTROLLER

18
ISLANDING DETECTOR

22A
EFFECTIVE POWER CALCULATOR

26A
REACTIVE POWER COMMAND VALUE SUPPLIER

20A
REACTIVE POWER VARYING UNIT

EP 3 293 848 A1

16

FIG. 6

```
              ┌──────────────┐
              │    START     │
              └──────┬───────┘
                     │
       ┌─────────────▼──────────────┐
       │   OUTPUT REACTIVE          │
   ┌──▶│   POWER BASED ON           │──── S100A
   │   │   EXTERNAL COMMAND         │
   │   └─────────────┬──────────────┘
   │                 │
   │   ┌─────────────▼──────────────┐
   │   │   DETECT FREQUENCY         │──── S102
   │   │   OF GRID VOLTAGE          │
   │   └─────────────┬──────────────┘
   │                 │
   │            ╱────▼─────╲  S104A
   │    NO    ╱  INJECT      ╲
   ├─────────   EFFECTIVE POWER?
   │          ╲              ╱
   │            ╲────┬─────╱
   │                 │ YES
   │   ┌─────────────▼──────────────┐
   │   │  COMPUTE EFFECTIVE POWER   │──── S106A
   │   └─────────────┬──────────────┘
   │                 │
   │   ┌─────────────▼──────────────┐
   │   │  COMPUTE VARIATION         │──── S108A
   │   │  AMOUNT OF REACTIVE POWER  │
   │   └─────────────┬──────────────┘
   │                 │
   │   ┌─────────────▼──────────────┐
   │   │  OUTPUT EFFECTIVE POWER    │──── S110
   │   │  AND REACTIVE POWER        │
   │   └─────────────┬──────────────┘
   │                 │        S112
   │            ╱────▼─────╲
   │    NO    ╱              ╲
   └─────────   ISLANDING?
              ╲              ╱
                ╲────┬─────╱
                     │ YES
       ┌─────────────▼──────────────┐
       │   STOP POWER               │──── S114
       │   CONVERTER                │
       └─────────────┬──────────────┘
                     │
              ┌──────▼───────┐
              │    END       │
              └──────────────┘
```

17

FIG. 7

FIG. 8

FIG. 9

FIG. 10

FIG. 11

GRID VOLTAGE[V]

GRID CURRENT[A]

OUTPUT
CURRENT[A]

LOAD CURRENT[A]

FREQUENCY
DEVIATION[Hz]

0          t11          t12          t13

TIME[sec]

## INTERNATIONAL SEARCH REPORT

| International application No. |
| --- |
| PCT/JP2015/062869 |

A.    CLASSIFICATION OF SUBJECT MATTER
*H02J3/38*(2006.01)i

According to International Patent Classification (IPC) or to both national classification and IPC

B.    FIELDS SEARCHED

Minimum documentation searched (classification system followed by classification symbols)
H02J3/38

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X<br>A | JP 2011-15493 A  (Fuji Electric Holdings Co.,<br>Ltd.),<br>20 January 2011 (20.01.2011),<br>entire text; all drawings<br>& US 2010/0327822 A1      & CN 101938140 A | 1-3<br>4-5 |
| X<br>A | JP 2014-207811 A  (Omron Corp.),<br>30 October 2014 (30.10.2014),<br>entire text; all drawings<br>& WO 2014/171043 A1 | 1-3<br>4-5 |
| A | JP 2008-61356 A  (Omron Corp.),<br>13 March 2008 (13.03.2008),<br>paragraphs [0065] to [0091]<br>(Family: none) | 1-5 |

☐   Further documents are listed in the continuation of Box C.          ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23 June 2015 (23.06.15) | 30 June 2015 (30.06.15) |

| Name and mailing address of the ISA/<br>Japan Patent Office<br>3-4-3,Kasumigaseki,Chiyoda-ku,<br>Tokyo 100-8915,Japan | Authorized officer |
| --- | --- |
| | Telephone No. |

Form PCT/ISA/210 (second sheet) (July 2009)

**EP 3 293 848 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003111283 A
- JP H8223809 B
- JP 2008061356 A